# EUROPÄISCHE PATENTANMELDUNG

(11) **EP 1 308 657 A2**
(43) Veröffentlichungstag der Anmeldung: **07.05.2003**
(21) Anmeldenummer: 02024165.9
(22) Anmeldetag: 30.10.2002
(51) Int. Cl.: F16K 7/04, F16K 31/04

(54) **Absperrorgan für strömende Medien**

(30) Priorität: 03.11.2001 DE 20117946 U
(71) Anmelder: A. und K. Müller GmbH & Co. KG, 40595 Düsseldorf (DE)
(72) Erfinder: Glaus, Uwe, 40593 Düsseldorf (DE)
(74) Vertreter: Feder, Wolf-Dietrich, Dr. Dipl.-Phys.

(57) **Zusammenfassung**

Ein Absperrorgan für strömende Medien mit einem Gehäuse (1.1, 1.2), durch welches ein Schlauchstück (2) aus flexiblem Material mit einem Einlaßende und einem Auslaßende geführt ist, und einem im Gehäuse (1.1, 1.2) in Querrichtung zum Schlauchstück (2) bewegbaren Quetschorgan (3), das mit einer Betätigungsvorrichtung (EM) gekoppelt und so angeordnet und bewegbar ist, daß in einer Öffnungsstellung des Quetschorgans (3) der Durchtritt des Mediums durch das Schlauchstück (2) freigegeben ist, während in einer Schließstellung das Schlauchstück (2) durch das Quetschorgan (3) gegen ein Widerlager (1.3) und soweit zusammengedrückt ist, daß kein Mediumsdurchtritt erfolgt. Als Betätigungsvorrichtung dient ein Elektromotor (EM), dessen Abtriebselement (10) über ein Schraubgetriebe (8-6) mit einer in Querrichtung zum Schlauchstück (2) verschiebbaren Steuerstange (4) verbunden ist, an deren Ende das Quetschorgan (3) angeordnet ist.

## Beschreibung

Die Erfindung betrifft ein Absperrorgan für strömende Medien mit den Merkmalen aus dem Oberbegriff des Patentanspruchs 1.

Derartige Absperrorgane sind an sich bekannt und werden häufig als "Schlauchquetschventile" bezeichnet. Sie haben den Vorteil, daß das strömende und abzusperrende Medium innerhalb des das Gehäuse durchsetzenden Schlauchstücks bleibt und keine weiteren Teile des Absperrorgans mit dem Medium in Kontakt kommen.

Bei den bekannten Absperrorganen wird als Betätigungsvorrichtung, so weit sie nicht von Hand betätigt werden, eine Magnetspule verwendet, durch welche das Quetschorgan hin und her bewegt wird. Dies hat den Nachteil, daß für das Absperrorgan nur zwei Stellungen möglich sind, nämlich "Auf" und "Zu". Eine Zwischenstellung, bei welcher das Medium das Absperrorgan gedrosselt durchströmt, ist nicht möglich.

Der Erfindung liegt die Aufgabe zugrunde, ein Absperrorgan mit den Merkmalen aus dem Oberbegriff des Patentanspruchs 1 so auszugestalten, daß außer der völlig geöffneten und der völlig geschlossenen Stellung des Quetschorgans Zwischenstellungen erreicht werden können. Dabei sollte die Betätigung automatisch erfolgen, und es sollte die Möglichkeit geschaffen werden, die Zwischenstellungen genau reproduzierbar einzustellen.

Die Lösung dieser Aufgabe geschieht mit den Merkmalen aus dem kennzeichnenden Teil des Patentanspruchs 1. Vorteilhafte Weiterbildungen des erfindungsgemäßen Absperrorgans sind in den abhängigen Ansprüchen beschrieben.

Es ist grundsätzlich bekannt, Ventile nicht nur durch Magnetspulen sondern auch durch Elektromotoren zu betätigen. Eine elektromotorisch ansteuerbare Ventileinrichtung ist beispielsweise in DE 200 00 165.5 U beschrieben. Bei einem Absperrorgan der obenerwähnten Bauart ist eine solche Betätigungsvorrichtung bisher nicht eingesetzt worden, obwohl sie entscheidende Vorteile mit sich bringt. Bei der Ausbildung der Betätigungsvorrichtung als Elektromotor, beispielsweise als Schrittmotor oder auch als Gleichstrommotor mit Inkrementalgeber ist es möglich, in einfacher Weise Zwischenwerte der Einstellung des Quetschorgans herzustellen. So können durch entsprechende Ansteuerung des Elektromotors beliebige Kennlinien und somit Absperrorgane mit Proportionalverhalten erzeugt werden.

Im folgenden wird anhand der beigefügten Zeichnungen ein Ausführungsbeispiel für ein Absperrorgan nach der Erfindung näher erläutert:

In den Zeichnungen zeigen:
Fig. 1 das Absperrorgan in einer teilweise geschnittenen Seitenansicht in Querrichtung zum Schlauchstück bei geöffnetem Quetschorgan;
Fig. 2 das Absperrorgan nach Fig. 1 in einer teilweise geschnittenen Ansicht in Längsrichtung des Schlauchstücks bei geöffnetem Quetschorgan;
Fig. 3 in einer Darstellung analog Fig. 1 das Absperrorgan bei geschlossenem Quetschorgan;
Fig. 4 in einer Darstellung analog Fig.2 das Absperrorgan bei geschlossenem Quetschorgan.

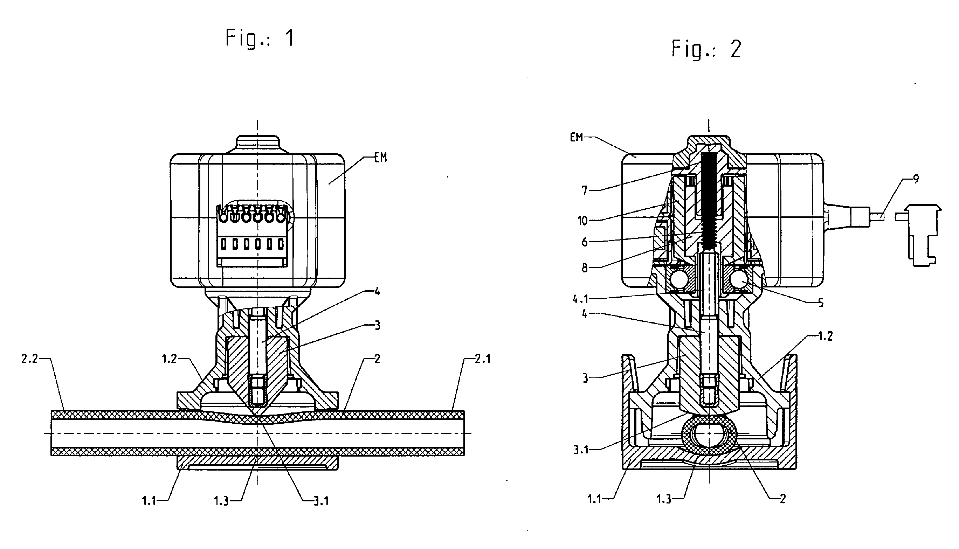

Das in den Fig. 1 bis 4 dargestellte Absperrorgan für strömende Medien besitzt ein Gehäuse mit einem Unterteil 1.1 und einem Oberteil 1.2, wobei an der Oberseite des Oberteils ein Elektromotor EM angeordnet ist. Durch das Gehäuse hindurch ist ein Schlauchstück 2 aus flexiblem Material geführt mit zwei Enden 2.1 und 2.2, von denen jeweils eines als Einlaßende und das andere als Auslaßende verwendet werden kann. Die Funktion der beiden Enden ist vertauschbar.

Im Gehäuse ist ein kolbenartig ausgebildetes Quetschorgan 3 angeordnet, das in Querrichtung zum Schlauchstück 2 verschiebbar ist und auf das Schlauchstück 2 zubewegt werden kann. Das Quetschorgan 3 besitzt an seiner dem Schlauchstück 2 zugewandten Seite einen sich zum Schlauchstück hin verjüngenden Querschnitt mit einer in Querrichtung zum Schlauchstück verlaufenden Quetschkante 3.1. An der vom Quetschorgan 3 abgewandten Seite ist unter dem Schlauchstück 2 ein mit dem Gehäuse einstückig verbundenes Widerlager 1.3 angeordnet. Das Widerlager 1.3 besitzt in Querrichtung zum Schlauchstück 2 eine konkave Krümmung, und die Quetschkante 3.1 des Quetschorgans 3 weist in Querrichtung zum Schlauchstück 2 eine entsprechende konvexe Krümmung auf.

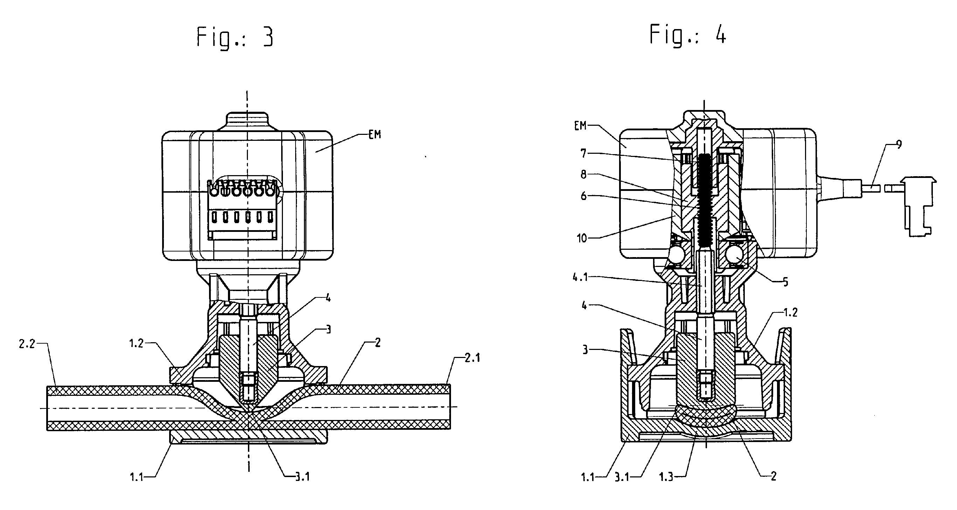

In den Fig. 1 und 2 ist das Absperrorgan in der geöffneten Stellung des Quetschorgans 3 dargestellt, bei welcher das Quetschorgan 3 so weit in Querrichtung vom Schlauchstück 2 wegbewegt ist, daß der Durchtritt des Mediums durch das Schlauchstück 2 freigegeben ist. In der Darstellung nach Fig. 3 und 4 befindet sich das Quetschorgan 3 in der Schließstellung, in der es so weit auf das Schlauchstück 2 zubewegt ist, daß dieses durch die Quetschkante 3.1 zusammengedrückt und auf das Widerlager 1.3 aufgepreßt wird, so daß, wie aus Fig. 3 und 4 gut zu ersehen, kein Mediumsdurchtritt erfolgen kann.

Die Bewegung des Quetschorgans 3 erfolgt mittels des Elektromotors EM, der beispielsweise als Schrittmotor ausgebildet sein kann. Zur Verbindung zwischen dem Quetschorgan 3 und dem Elektromotor EM dient eine Steuerstange 4, deren eines Ende in das Quetschorgan 3 eingeschraubt ist. Ein mittlerer Abschnitt der Steuerstange 4 ist in einer Vierkantführung 4.1 geführt, während der andere Endabschnitt ein Außengewinde 6 besitzt. Durch die Vierkantführung ist die Steuerstange 4 verschiebbar, aber unverdrehbar im Gehäuseteil 1.2 geführt. Das drehende Abtriebselement 10 des Elektromotors EM ist mit einer koaxial zur Steuerstange 4 liegenden Gewindemutter 8 verbunden, in die das mit Außengewinde 6 versehene Ende der Steuerstange 4 hineingeführt ist. Dabei greift das Außengewinde der Steuerstange in das Innengewinde der Gewindemutter ein. Dieses einfach ausgebildete Schraubgetriebe bewirkt, daß bei jeder Drehung der Gewindemutter 8 um einen vorgegebenen Winkelbetrag die Steuerstange 4 und mit ihr das Quetschorgan 3 je nach der Drehrichtung des Abtriebselements 10 eine Bewegung in Schließrichtung oder in Öffnungsrichtung des Quetschorgans 3 ausführt. Gegenüber dem Gehäuseteil 1.2 ist die Gewindemutter 8 über ein Kugellager 5 drehbar gelagert. Das vom Quetschorgan 3 abgewandte Ende der Steuerstange 4 ist in einer Hülse 7 geführt.

Über Eingangsklemmen 9 werden dem Elektromotor EM von einer nicht dargestellten Steuereinrichtung aus die notwendigen elektrischen Signale zugeführt.

## Patentansprüche

1. Absperrorgan für strömende Medien mit einem Gehäuse (1.1, 1.2), durch welches ein Schlauchstück (2) aus flexiblem Material mit einem Einlaßende (2.1) und einem Auslaßende (2.2) geführt ist, und einem im Gehäuse (1.1, 1.2) in Querrichtung zum Schlauchstück (2) bewegbaren Quetschorgan (3), das mit einer Betätigungsvorrichtung (EM) gekoppelt und so angeordnet und bewegbar ist, daß in einer Öffnungsstellung des Quetschorgans (3) der Durchtritt des Mediums durch das Schlauchstück (2) freigegeben ist, während in einer Schließstellung das Schlauchstück (2) durch das Quetschorgan (3) gegen ein Widerlager (1.3) und so weit zusammengedrückt ist, daß kein Mediumsdurchtritt erfolgt, **dadurch gekennzeichnet, daß** als Betätigungsvorrichtung ein Elektromotor (EM) dient, dessen Abtriebselement (10) über ein Schraubgetriebe (8 - 6) mit einer in Querrichtung zum Schlauchstück (2) verschiebbaren Steuerstange (4) verbunden ist, an deren Ende das Quetschorgan (3) angeordnet ist.

2. Absperrorgan nach Anspruch 1, **dadurch gekennzeichnet, daß** der Elektromotor (EM) ein Schrittmotor ist.

3. Absperrorgan nach Anspruch 1, **dadurch gekennzeichnet, daß** der Elektromotor (EM) ein Gleichstrommotor mit Inkrementalgeber ist.

4. Absperrorgan nach einem der Ansprüche 1 bis 3, **dadurch gekennzeichnet, daß** das Quetschorgan als im Gehäuse (1.1, 1.2) geführter Kolben (3) ausgebildet ist, der an seiner dem Schlauchstück (2) zugewandten Seite einen sich zum Schlauchstück hin verjüngenden Querschnitt mit in Querrichtung zum Schlauchstück (2) verlaufender Quetschkante (3.1) aufweist.

5. Absperrorgan nach Anspruch 4, **dadurch gekennzeichnet, daß** das Widerlager (1.3) in Querrichtung zum Schlauchstück (2) eine konkave Krümmung besitzt und die Quetschkante (3.1) in Querrichtung zum Schlauchstück (2) eine entsprechende konvexe Krümmung aufweist.
